(19) Europäisches Patentamt
European Patent Office
Office européen des brevets

(11) EP 1 802 692 B1

(12) EUROPEAN PATENT SPECIFICATION

(45) Date of publication and mention of the grant of the patent:
**11.03.2009 Bulletin 2009/11**

(21) Application number: **05796449.6**

(22) Date of filing: **30.08.2005**

(51) Int Cl.:
***C08K 5/13*** *(2006.01)* ***C08K 5/05*** *(2006.01)*

(86) International application number:
**PCT/US2005/031080**

(87) International publication number:
**WO 2006/026696 (09.03.2006 Gazette 2006/10)**

# (54) TOCOPHEROL COMPOSITIONS AND USES

TOCOPHEROLZUSAMMENSETZUNGEN UND VERWENDUNG

COMPOSITIONS DE TOCOPHEROL ET UTILISATIONS

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.08.2004 US 605161 P**

(43) Date of publication of application:
**04.07.2007 Bulletin 2007/27**

(73) Proprietor: **CARGILL, INCORPORATED**
**Wayzata, MN 55391-5624 (US)**

(72) Inventors:
- **HAWORTH, James**
  **Waconia, Minnesota 55387 (US)**
- **DILLMAN, Steven, H.**
  **Snohomish, Washington 98290 (US)**
- **SUFFIELD, Rachel**
  **Clifton Park, NY 12065 (US)**

(74) Representative: **Wibbelmann, Jobst**
**Wuesthoff & Wuesthoff**
**Patent- und Rechtsanwälte**
**Schweigerstrasse 2**
**81541 München (DE)**

(56) References cited:
**EP-A- 0 860 467**
**DE-A1- 19 521 848**
**DE-A1- 19 920 590**
**US-A- 5 877 242**
**US-A- 6 060 545**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 802 692 B1

## Description

RELATED APPLICATIONS

This application claims priority under 35 U.S.C. §119(e) of U.S. Application No. 60/602,878, filed August 20, 2004.

The present invention relates to compositions comprising tocopherol, and their methods of use and preparation.

BRIEF DESCRIPTION OF THE DRAWINGS

FIG. 1 is a response surface plot of the oxidative-induction time ("OIT") of the primary antioxidant, Irganox® 1010, and the secondary antioxidant, Irgafos 168, in a polypropylene formulation.
FIG. 2 is a response surface plot of the OIT of Irganox® 1010 and Irgafos 168 in an acrylonitrile-butadiene-styrene ("ABS") formulation.
FIG. 3 is a response surface plot of the OIT of the primary antioxidant, Irganox® E-201, and Irgafos 168 in a polypropylene formulation.
FIG. 4 is a response surface plot of the OIT of Irganox® E-201 and Irgafos 168 in an ABS formulation.
FIG. 5 is a response surface plot of the OIT of a mixed tocopherol product and Irgafos 168 in a polypropylene formulation.
FIG. 6 is a response surface plot of the OIT of a mixed tocopherol product and Irgafos 168 in an ABS formulation.
FIG. 7 is a data plot and predicted linear regression model of the OIT of ABS formulations comprising a mixed tocopherol product, a γ-rich tocopherol additive, a 5-rich tocopherol additive, Irganox® E-201, Cyanox® 425, and Cyanox® 2246.
FIG. 8 is a data plot and predicted quadratic regression model of the OIT of ABS formulations comprising a mixed tocopherol product, a γ-tocopherol additive, a δ-tocopherol additive, Irganox® E-201, Cyanox® 425, and Cyanox® 2246.

One aspect of the present invention relates to a composition comprising:

(i) acrylonitrile-butadiene-styrene ("ABS"); and
(ii) γ-tocopherol at a minimum amount of about 25 ppm by weight of the composition.

In one embodiment, the amount of γ-tocopherol is about 25 ppm to about 7,000 ppm, by weight of the composition. In another embodiment, the amount of γ-tocopherol is about 5,500 ppm to about 7,000 ppm. In further embodiments, the amount of γ-tocopherol is at a minimum of about 50 ppm; *or* at a minimum of about 100 ppm; *or* at a minimum of about 500 ppm; *or* at a minimum of about 1,000 ppm; *or* at a minimum of about 2,000 ppm; or at a minimum of about 3,000 ppm; *or* at a minimum of about 4,000 ppm; *or* at a minimum of about 5,000 ppm; *or* at a minimum of about 6,000 ppm; or at a minimum of about 7,000 ppm, by weight of the composition. Another aspect of the present invention relates to a composition comprising:

(i) ABS; and
(ii) a gamma (γ)-rich or delta (δ)-rich tocopherol additive.

A γ-rich or δ-rich tocopherol additive is a substance comprising one or more naturally occurring or synthetic tocopherol(s), wherein the predominant tocopherol is γ-tocopherol or δ-tocopherol, respectively. In addition to the γ-tocopherol or δ-tocopherol, the γ-rich or δ-rich tocopherol additive may optionally comprise one or more additional tocopherol(s) and/or tocopherol derivative(s). Non-limiting examples of tocopherols and tocopherol derivatives include mono-, di- and tri-methyl tocols; alpha (α)-, beta (β)-, epsilon (ε)-, zeta (ζ)- and eta (η)- tocopherols; tocopheryl acetate; tocopheryl succinate; tocopheryl polyoxyethylene succinate; tocopheryl benzoate; tocopheryl propionate; tocopheryl sorbate; tocopheryl oleate; tocopheryl orotate; tocopheryl linoleate; and tocopheryl nicotinate.

The γ-rich or δ-rich tocopherol additive may be obtained by any means and from any source known in the art. For example, the γ-rich or δ-rich tocopherol additive may be extracted from a byproduct of a vegetable oil refining process and optionally purified. In one embodiment, the byproduct is a deodorizer distillate. Extraction of the tocopherol additive may be achieved using any known technique, including one or more of the methods described in U.S. Patent Publication No. 20040047970. In another embodiment, the byproduct is derived from a food-grade vegetable oil, such as corn oil, soy oil, canola oil, palm kernel oil, wheat-germ oil, cottonseed oil, palm oil, peanut oil, rapeseed oil, safflower oil or sunflower oil.

ABS is a terpolymer of acrylonitrile (CH2=CHCN), 1,3-butadiene (CH2=CH-CH=CH2), and styrene (CH2=CHC6H5) monomers. The properties of ABS can be readily tailored to meet specific end use requirements. For example, the modulus, hardness, strength, impact resistance, flowability, color, gloss, conductivity, stability and chemical resistance of ABS may be adjusted by varying the proportions of the monomers, the manner in which the monomers are polymerized, the size and cross-link density of butadiene particles and/or the molecular weight of the styrene-acrylonitrile copolymer. Those skilled in the art will appreciate the various forms of ABS contemplated by the present invention.

ABS may also be blended or alloyed with other materials to improve or extend the range of its properties.

In one embodiment of the present invention, the composition further comprises one or more polymer(s). Non-limiting examples of useful polymers include polycarbonates, poly(methyl)metacrylates, polybutylene terephthalates, polyamides and polyvinyl chlorides.

In another embodiment, the composition further comprises one or more antioxidant(s). Non-limiting examples of antioxidants include primary antioxidants, secondary antioxidants and multifunctional antioxidants.

Primary antioxidants, also known as chain-breaking antioxidants or free radical scavengers, intercept and stabilize free radicals by donating a proton, typically an active hydrogen atom. Examples of primary antioxidants include, without limitation, benzofuranone derivatives (also known as lactones), phenol derivatives and amine derivatives. Phenol derivatives may be sterically hindered and bridged or unbridged. Non-limiting examples of phenol derivatives include bis-phenols, polyphenols, 2,6-di-t-butyl-4-methylphenol and the compounds described in U.S. Patent No. 4,233,209 and U.S. Patent No. 4,013,621. Non-limiting examples of amine derivatives include, without limitation, phenylnapthylamines, ketone-amine condensates, substituted diphenylamines and substituted 9-phenylene diamines.

Secondary antioxidants, also known as preventative antioxidants, peroxide decomposers or metal deactivators, prevent the formation of free radicals by decomposing hydroperoxides prior to their homolytic cleavage. Non-limiting examples of secondary antioxidants include mercaptans, sulphonic acids, zinc dialkylthiophosphate, zinc dimethyldithiocarbamate, thioesters and organophosphorus compounds. Thioester antioxidants, such as dilauryl thiodipropionate, distearyl thiodipropionate and dimyrstyl thiodipropionate, are efficient peroxide decomposers for saturated hydrocarbon polymers. A number of thioester antioxidants are commercially available, including Irganox® PS 800 (didodecyl 3,3'-thiodipropionate) (Ciba Specialty Chemicals, Inc., Tarrytown, New York) and Irganox® PS 802 (dioctadecyl 3,3'-thiodipropionate) (Ciba Specialty Chemicals, Inc., Tarrytown, New York). Organophosphorus antioxidants include trivalent phosphorus compounds, such as phosphites or phosphonates. As with thioester antioxidants, a number of organophosphorus compounds are commercially available, including tris(nonylphenyl) phosphite (TNPP), Irgafos 168 (tris(2,4-di-*tert*-butylphenyl)phosphite) (Ciba Specialty Chemicals, Inc., Tarrytown, New York), and Irgafos P-EQE (tetrakis(2,4-di-*tert*-butylphenyl)[1,1-biphenyl]-4,4'-diylbisphosphonite) (Ciba Specialty Chemicals, Inc., Tarrytown, New York).

Multi-functional antioxidants combine primary and secondary antioxidant functions in a single compound. Non-limiting examples of multi-functional antioxidants include Irganox® 1520 (4,6-bis (octylthiomethyl)-o-cresol) (Ciba Specialty Chemicals, Inc., Tarrytown, New York), Irganox® 1726 (4,6-bis (dodecylthiomethyl)-o-cresol) (Ciba Specialty Chemicals, Inc., Tarrytown, New York), hydroxylamines, and $\alpha$-tocopherol. A synthetic $\alpha$-tocopherol is commercially available as Irganox® E-201 (DL-alpha-tocopherol *or* 3,4-dihydro-2,5,7,8-tetramethyl-2-(4,8,12-trimethyltridecyl)-2H-1-benzopyran-6-ol)) (Ciba Specialty Chemicals, Inc., Tarrytown, New York).

In another embodiment, the composition further comprises one or more additive(s) independently selected from antistatic agents, flame retardants, light stabilizers, pigments, fillers, plasticizers, stabilizers, reinforcing agents, blowing agents, vulcanizing agents, coupling agents, nucleating agents, thermoplastic resins and rubbers, as are known in the art. Non-limiting examples of such additives include phthalic acid esters, glycol esters, fatty acid esters, phosphoric acid esters, lead compounds, cadmium compounds, zinc compounds, alkaline earth metal compounds, organic tin compounds, phosphoric acid esters, phosphoric acid ester halides, halides, inorganic materials, polyols containing phosphor, alumina, kaolin, clay, calcium carbonate, mica, talc, titanium dioxide, silica, glass lobing, metallic fiber, glass fiber, glass milled fiber, carbon fiber, ammonium carbonate, sodium hydrogen carbonate, nitroso compounds, azo compounds, vulcanization accelerator, acceleration assistant, ultraviolet absorber, metal deactivator, peroxide decomposing agent, silane compounds, titanium compounds, chromium compounds, aluminum compounds, dibenzylidene sorbitol compounds, and calcium carbonate.

In further embodiments, the tocopherol additive is present at about 5 ppm to about 10,000 ppm by weight of the composition; or at about 25 ppm to about 10,000 ppm; *or* at about 25 ppm to about 7,000 ppm; or about 50 ppm to about 10,000 ppm; *or* at about 1,000 ppm to about 4,000 ppm by weight of the composition; or at about 3,000 ppm to about 4,000 ppm *or* at about 5,500 ppm to about 7,000 ppm; or at a minimum of about 50 ppm; or at a minimum of about 100 ppm; *or* at a minimum of about 500 ppm; *or* at a minimum of about 1,000 ppm; or at a minimum of about 2,000 ppm; *or* at a minimum of about 3,000 ppm; *or* at a minimum of about 4,000 ppm; *or* at a minimum of about 5,000 ppm; *or* at a minimum of about 6,000 ppm; *or* at a minimum of about 7,000 ppm, *or* at a minimum of about 8,000 ppm, *or* at a minimum of about 9,000 ppm; *or* at a minimum of about 10,000 ppm, by weight of the composition.

In another embodiment, the tocopherol additive further comprises one or more tocopherol(s) independently selected from α-tocopherol, β-tocopherol, γ-tocopherol and δ-tocopherol.

In yet another embodiment, the tocopherol additive is γ-rich. In further embodiments, the composition comprises γ-tocopherol at about 5 ppm to about 10,000 ppm; *or* at about 25 ppm to about 10,000 ppm; or at about 25 ppm to about 7,000 ppm; or at about 5,500 ppm to about 7,000 ppm; or at a minimum of about 50 ppm; *or* at a minimum of about 100 ppm; *or* at a minimum of about 500 ppm; or at a minimum of about 1,000 ppm; *or* at a minimum of about 2,000 ppm; or at a minimum of about 3,000 ppm; *or* at a minimum of about 4,000 ppm; or at a minimum of about 5,000 ppm; *or* at a minimum of about 6,000 ppm; *or* at a minimum of about 7,000 ppm, by weight of the composition.

In another embodiment, the tocopherol additive is δ-rich. In further embodiments, the composition comprises δ-tocopherol at about 5 ppm to about 3,200 ppm; or about 1,000 to about 3,200 ppm; *or* at a minimum of about 50 ppm; *or* at a minimum of about 100 ppm; *or* at a minimum of about 500 ppm; *or* at a minimum of about 1,000 ppm; or at a minimum of about 1,500 ppm; *or* at a minimum of about 2,000 ppm; *or* at a minimum of about 2,500 ppm; or at a minimum of about 3,000 ppm; *or* at a minimum of about 3,200 ppm, by weight of the composition.

In yet further embodiments, the tocopherol additive comprises about 2 percent to about 22 percent α-tocopherol, about 0 percent to about 3 percent β-tocopherol, about 55 percent to about 70 percent γ-tocopherol, and about 10 percent to about 32 percent δ-tocopherol, by weight of the tocopherol additive; or about 3 percent to about 22 percent α-tocopherol, about 0 percent to about 2 percent β-tocopherol, about 59 percent to about 69 percent γ-tocopherol, and about 12 percent to about 26 percent δ-tocopherol, by weight of the tocopherol additive; or about 12 percent α-tocopherol, about 1 percent β-tocopherol, about 65 percent γ-tocopherol, and about 20 percent δ-tocopherol, by weight of the tocopherol additive.

The inventive compositions may be adapted for any end use application that is suitable for an ABS containing product. For example, the inventive compositions may serve as industrial lubricants for lubricating gears, bearings, turbines, compressors or other industrial equipment.

Another aspect of the present invention relates to a method for preparing a composition, which comprises combining a γ-tocopherol or a γ-rich or δ-rich tocopherol additive, with at least one of (i) an ABS; or (ii) a butadiene-containing elastomer and either acrylonitrile and styrene monomers, or a styrene-acrylonitrile copolymer.

In one embodiment, the γ-tocopherol or γ-rich or δ-rich tocopherol additive is present at a sufficient amount to stabilize the ABS against oxidative degradation, or to increase the oxidation induction time ("OIT") of ABS.

As used herein, "stabilizing" means improving the ability of a substance to withstand degradation. "Degradation" refers to a deleterious change in the chemical structure, physical properties, or appearance of a substance. See Tony Whelan, Polymer Technology Dictionary, Chapman & Hall, New York (1994). Typical macroscopic evidence of degradation in consumer products include char formation, cracking, discoloration, gel formation, loss of adhesion, loss of mechanical strength, and decreased viscosity. Degradation may be caused by exposure to heat, light, age, weathering, physical stress or chemicals, including oxygen (oxidative degradation). Oxidative degradation encompasses direct and auto-oxidation.

OIT provides a relative measure of a material's resistance to oxidative degradation, allowing the presence, quantity or effectiveness of an antioxidant to be determined. OIT may be measured by any standard test known in the art. However, for the purposes of determining whether a method or composition falls within the scope of the present invention, OIT is measured by the ASTM Test Method for Oxidative Induction Time of Polyolefins by Differential Scanning Calorimetry (D 3895).

In another embodiment, the amount(s) of the γ-tocopherol or γ-rich or δ-rich tocopherol additive and the optional antioxidant(s) is/are sufficient to obtain an ABS having a normalized OIT that is higher than the normalized OIT of a control ABS, wherein the control ABS is substantially the same as the ABS except that the control ABS has DL-alpha-tocopherol in place of the γ-tocopherol or γ-rich or δ-rich tocopherol additive.

In a further embodiment, the method further comprises polymerizing the acrylonitrile and styrene monomers, or the styrene-acrylonitrile copolymer, in the presence of the butadiene-containing elastomer. The polymerizing step may occur before, during or after the combining step. In one embodiment, the polymerizing step occurs during the combining step.

In another embodiment, the method further comprises combining the acrylonitrile and styrene monomers, styrene-acrylonitrile copolymer, butadiene-containing elastomer and/or ABS polymer with one or more antioxidant(s). In yet another embodiment, the one or more antioxidant(s) is/are secondary antioxidant(s).

Non-limiting examples of butadiene-containing elastomers include polybutadiene, acrylonitrile-butadiene copolymer and butadiene-styrene copolymer.

The polymerizing step may be carried out by any means known in the art, including without limitation emulsion, mass suspension, emulsion mass, continuous mass, solution and graft polymerization methods, as well as the methods described in U.S. Patent No. 6,492,467, U.S. Patent No. 6,228,938, U.S. Patent No. 5,741,853, U.S. Patent No. 5,719,232, U.S. Patent No. 5,470,915, U.S. Patent No. 5,414,045, U.S. Patent No. 5,223,577, U.S. Patent No. 5,075,375, and U.S. Patent No. 4,740,560. In addition, the ABS polymer may be produced in batches with the aid of a Brabender plasticorder, as described in U.S. Patent No. 5,290,836, U.S. Patent No. 4,518,795, and U.S. Patent No. 4,468,499.

The selected polymerization method may influence the structure of the resulting ABS polymer. In one embodiment, the ABS polymer comprises a continuous phase of styrene-acrylonitrile copolymers and an elastomeric phase of butadiene monomers or butadiene-containing polymers dispersed in the styrene-acrylonitrile matrix.

Another aspect of the present invention relates to a method for stabilizing ABS, which comprises combining a γ-tocopherol or a γ-rich or δ-rich tocopherol additive, with at least one of (i) an ABS; or (ii) a butadiene-containing elastomer and either acrylonitrile and styrene monomers, or a styrene-acrylonitrile copolymer.

In one embodiment, the method further comprises polymerizing the acrylonitrile and styrene monomers, or the styrene-acrylonitrile copolymer, in the presence of the butadiene-containing elastomer. The polymerizing step may occur before, during or after the combining step. In one embodiment, the polymerizing step occurs during the combining step.

In another embodiment, the method further comprises combining the acrylonitrile and styrene monomers, styrene-acrylonitrile copolymer, butadiene-containing elastomer and/or ABS polymer with one or more antioxidant(s). In yet another embodiment, the one or more antioxidant(s) is/are secondary antioxidant(s).

In a further embodiment, the γ-tocopherol or γ-rich or δ-rich tocopherol additive is present at a sufficient to stabilize ABS against oxidative degradation, or to increase the OIT of ABS.

In one embodiment, the amount(s) of the γ-tocopherol or γ-rich or δ-rich tocopherol additive and the optional antioxidant(s) is/are sufficient to obtain an ABS having a normalized OIT that is higher than the normalized OIT of a control ABS, wherein the control ABS is substantially the same as the ABS except that the control ABS has DL-alpha-tocopherol in place of the γ-tocopherol or γ-rich or δ-rich tocopherol additive. In further embodiments, the amount(s) of the γ-tocopherol or γ-rich or δ-rich tocopherol additive and the optional antioxidant(s) is/are sufficient to increase the normalized OIT of the ABS polymer to 5 minutes or greater; 7 minutes or greater; 8 minutes or greater; 9 minutes or greater; 10 minutes or greater; 12 minutes or greater; 15 minutes or greater; 18 minutes or greater; 20 minutes or greater; 25 minutes or greater; 30 minutes or greater; or 35 minutes or greater. The amount(s), as described above, may also apply to the compositions of the present invention and to their methods of preparation.

Other than in the working examples, or where otherwise indicated, all numbers expressing quantities of ingredients, reaction conditions, and so forth used in the specification and claims are to be understood as being modified by the term "about". Accordingly, unless indicated to the contrary, such numbers are approximations that may vary depending upon the-desired properties sought to be obtained by the present invention. At the very least, and not as an attempt to limit the application of the doctrine of equivalents to the scope of the claims, each numerical parameter should be construed in light of the number of significant digits and ordinary rounding techniques.

While the numerical ranges and parameters setting forth the broad scope of the invention are approximations, the numerical values set forth in the working examples are reported as precisely as possible. Any numerical value, however, inherently contains certain errors necessarily resulting from the standard deviation found in their respective testing measurements.

EXAMPLES

The following examples are illustrative of the present invention and are not intended to be limitations thereon.

Example 1: Preparation of Antioxidant-Containing Polypropylene and ABS Samples

**Materials**

Polymers:

BP Amoco 1046 polypropylene homopolymer (Bamberger Polymers, Inc., Brea, California)
ABS (GE Cycolac GPM-4700) (GE Plastics, Brea, California)

Note: each polymer contains a small amount of antioxidant as supplied from the manufacturer. No effort was made to extract the antioxidant.

Primary Antioxidants:

Irganox® 1010 (pentaerythritol tetrakis(3-(3,5-di-tert-butyl-4-hydroxyphenyl)propionate)) (Ciba Specialty Chemicals, Inc., Tarrytown, New York)

Irganox® E-201 (DL-alpha-tocopherol *or* 3,4-dihydro-2,5,7,8-tetramethyl-2-(4,8,12-trimethyltridecyl)-2H-1-benzopyran-6-ol) (Ciba Specialty Chemicals, Inc., Tarrytown, New York)
Mixed tocopherol product

Secondary Antioxidant:

Irgafos 168 (*tris*(2,4-di-*tert*-butylphenyl)phosphite) (Ciba Specialty Chemicals, Inc., Tarrytown, New York)

**Procedures**

A mixed tocopherol product, comprising about 64.8% γ-tocopherol, about 19.8% δ-tocopherol, about 12.2% α-tocopherol, about 1.2% β-tocopherol, was extracted from a soy oil distillate, using known commercial methods.

Irganox® E-201 and the mixed tocopherol product were used in equal amounts. The amount of Irganox® 1010 was scaled down by a factor of 1.45. These amounts were designed to correct for differences in molecular weight and number of functional groups in Irganox® 1010 relative to the mixed tocopherol product, so that all results would be on a molar equivalent basis.

For each polypropylene sample, 40.5 g of polypropylene powder was weighed out. In runs using only powdered antioxidants (Irganox® 1010 and Irgafos 168), the polypropylene was poured slowly into a Brabender plasticorder at a temperature of 200 degrees Celsius and a speed of 100 rpm. The powdered antioxidants were added to the plasticorder immediately following the powder, and mixed for two minutes before being removed.

In runs using a liquid antioxidant (mixed tocopherol product or Irganox® E-201), a small amount of the polypropylene was removed before it was added to the plasticorder. The liquid antioxidant was added to the removed polypropylene, which served as a carrier. The remaining polypropylene was poured slowly into the plasticorder, followed by the polypropylene containing liquid antioxidant, followed by any Irgafos 168 called for in the recipe, and mixed for two minutes.

The process for preparing ABS samples was the same except that the plasticorder temperature was 180 degrees Celsius. In addition, before mixing the ABS, Teflon tape was applied to the mouth of the plasticorder to minimize the chance of material adhering to the mouth and thereby not entering the plasticorder.

The resulting antioxidant-containing polypropylene and ABS samples are shown in Tables 1 and 2.

Table 1: Polypropylene with Antioxidant (AO) Formulations

| | Sample (percent weight of polymer) | | | | | | | | |
|---|---|---|---|---|---|---|---|---|---|
| | **1** | **2** | **3** | **4** | **5** | **6** | **7** | **8** | **9** |
| **Irganox® 1010 / Irgafos 168** | 0.0 / 0.1 | 0.0293 / 0.0293 | 0.0293 / 0.171 | 0.1 / 0.0 | 0.1 / 0.1 | 0.1 / 0.2 | 0.171 / 0.0293 | 0.171/ 0.171 | 0.2 / 0.1 |
| **Irganox® E-201 / Irgafos 168** | 0.0 / 0.1 | 0.0425 / 0.0293 | 0.0425 / 0.171 | 0.145 / 0.0 | 0.145 / 0.1 | 0.145 / 0.2 | 0.248 / 0.0293 | 0.248 / 0.171 | 0.29 / 0.1 |
| **Mixed tocopherol product / Irgafos 168** | 0.0 / 0.1 | 0.0425 / 0.0293 | 0.0425 / 0.171 | 0.145 / 0.0 | 0.145 / 0.1 | 0.145 / 0.2 | 0.248 / 0.0293 | 0.248 / 0.171 | 0.29 / 0.1 |
| **Primary AO/ Secondary AO** | -1.4/0 | -1/-1 | -1/1 | 0/-1.4 | 0/0 | 0/1.4 | 1/-1 | 1/1 | 1.4/0 |

| Table 2: ABS with Antioxidant (AO) Formulations | | | | | | | | | |
|---|---|---|---|---|---|---|---|---|---|
| | **Sample (percent weight of polymer)** | | | | | | | | |
| | **1** | **2** | **3** | **4** | **5** | **6** | **7** | **8** | **9** |
| **Irganox® 1010 / Irgafos 168** | 0.0 / 0.2 | 0.0586 / 0.0586 | 0.0586 / 0.3414 | 0.2 / 0.0 | 0.2 / 0.2 | 0.2 / 0.4 | 0.3414 / 0.0586 | 0.3414 / 0.3414 | 0.4 / 0.2 |
| **Irganox® E-201 / Irgafos 168** | 0.0 / 0.2 | 0.0849 / 0.0586 | 0.0849 / 0.3414 | 0.29 / 0.0 | 0.29 / 0.2 | 0.29 / 0.4 | 0.495 / 0.586 | 0.495 / 0.3414 | 0.58 / 0.2 |
| **Mixed tocopherol product / Irgafos 168** | 0.0 / 0.2 | 0.0849 / 0.0586 | 0.0849 / 0.3414 | 0.29 / 0.0 | 0.29 / 0.2 | 0.29 / 0.4 | 0.495 / 0.586 | 0.495 / 0.3414 | 0.58 / 0.2 |
| **Primary AO/ Secondary AO** | -1.4/0 | -1/-1 | -1/1 | 0/-1.4 | 0/0 | 0/1.4 | 1/-1 | 1/1 | 1.4/0 |

Example 2: OIT Test Measurements of Polypropylene and ABS Samples

OIT test measurements were performed on a TA Instruments 910 differential scanning calorimeter ("DSC") (TA Instruments, Inc., New Castle, Delaware). Samples were cut from each polypropylene and ABS formulation prepared in Example 1. For each polypropylene formulation, the sample size was 10.2 mg. For each ABS formulation, the sample size was 10.3 mg. Samples were placed on open DSC pans, and placed within the DSC sample chamber. The chamber was purged with 20 ml/min. of nitrogen, and heated at 20 degrees Celsius/min. until a stable test temperature was achieved. A stable test temperature was achieved when the temperature drift of the sample was less than 0.1 degrees Celsius. For polypropylene samples, the test temperature was 220 degrees Celsius. For ABS samples, the test temperature was 187 degrees Celsius. The DSC sample chamber was then purged with 20 ml/min. of oxygen, and the time recorded. Each test was allowed to continue until the sample exotherm reached a maximum. The onset of the exotherm was determined by the intersection of a line extrapolated from the baseline and a second line extrapolated from the inflection of the exotherm. OIT was recorded as the difference between the time at which the chamber was purged with oxygen and the onset of the sample exotherm.

The OIT data for polypropylene and ABS samples containing Irganox® 1010 and Irgafos 168 are shown below in Table 3 and Table 4, and graphically presented in FIG. 1 and FIG. 2.

Table 3: OIT Data for Polypropylene with Antioxidant Formulations

| Sample | Irganox® 1010 | Irgafos 168 | OIT (min.) |
|---|---|---|---|
| 1 | 0.0 | 0.1 | 3.62 |
| | | | 3.49 |
| 2 | 0.0293 | 0.0293 | 2.90 |
| | | | 3.97 |
| 3 | 0.0293 | 0.171 | 3.40 |
| | | | 4.40 |
| 4 | 0.1 | 0.0 | 3.62 |
| | | | 3.49 |
| 5 | 0.1 | 0.1 | 4.03 |
| | | | 4.87 |
| 6 | 0.1 | 0.2 | 6.94 |
| | | | 10.45 |
| 7 | 0.171 | 0.0293 | 5.55 |

(continued)

| Sample | Irganox® 1010 | Irgafos 168 | OIT (min.) |
|---|---|---|---|
| | | | 9.73 |
| 8 | 0.171 | 0.171 | 6.28 |
| | | | 21.80 |
| 9 | 0.2 | 0.1 | 17.22 |
| | | | 5.64 |

Table 4: OIT Data for ABS with Antioxidant Formulations

| Sample | Irganox® 1010 | Irgafos 168 | OIT (min.) |
|---|---|---|---|
| 1 | 0.0 | 0.2 | 7.5 |
| 2 | 0.0586 | 0.0586 | 5.57 |
| 3 | 0.0586 | 0.3414 | 12.64 |
| 4 | 0.2 | 0.0 | 7.65 |
| 5 | 0.2 | 0.2 | 10.3 |
| 6 | 0.2 | 0.4 | 18.87 |
| 7 | 0.3414 | 0.586 | 16.5 |
| 8 | 0.3414 | 0.3414 | 12.87 |
| 9 | 0.4 | 0.2 | 23.65 |

The OIT data for polypropylene and ABS samples containing Irganox® E-201 and Irgafos 168 are shown in Table 5 and Table 6, and graphically presented in FIG. 3 and FIG. 4.

Table 5: OIT Data for Polypropylene with Antioxidant Formulations

| Sample | Irganox® E-201 | Irgafos 168 | OIT (min.) |
|---|---|---|---|
| 1 | 0.0 | 0.1 | 2.70 |
| 2 | 0.0425 | 0.0293 | 11.17 |
| 3 | 0.0425 | 0.171 | 6.22 |
| 4 | 0.145 | 0.0 | 19.43 |
| 5 | 0.145 | 0.1 | 23.96 |
| 6 | 0.145 | 0.2 | 25.40 |
| 7 | 0.248 | 0.0293 | 23.90 |
| 8 | 0.248 | 0.171 | 6.22 |
| 9 | 0.29 | 0.1 | 19.83 |

Table 6: OIT Data for ABS with Antioxidant Formulations

| Sample | Irganox® E-201 | Irgafos 168 | OIT (min.) |
|---|---|---|---|
| 1 | 0.0 | 0.2 | 8.41 |
| 2 | 0.0849 | 0.0586 | 11.52 |
| 3 | 0.0849 | 0.3414 | 13.50 |
| 4 | 0.29 | 0.0 | 17.16 |
| 5 | 0.29 | 0.2 | 21.73 |
| 6 | 0.29 | 0.4 | 15.35 |
| 7 | 0.495 | 0.586 | 12.42 |
| 8 | 0.495 | 0.3414 | 14.99 |
| 9 | 0.58 | 0.2 | 11.43 |

The OIT data for polypropylene and antioxidant samples containing the mixed tocopherol product and Irgafos 168 are shown in Table 7 and Table 8, and graphically presented in FIG. 5 and FIG. 6.

Table 7: OIT Data for Polypropylene with Antioxidant Formulations

| Sample | Mixed tocopherol product | Irgafos 168 | OIT (in duplicate) |
|---|---|---|---|
| 1 | 0.0 | 0.1 | 3.14 |
| | | | 2.10 |
| 2 | 0.0425 | 0.0293 | 16.98 10.22 |
| 3 | 0.0425 | 0.171 | 25.33 |
| | | | 23.81 |
| 4 | 0.145 | 0.0 | 21.47 |
| | | | 26.66 |
| 5 | 0.145 | 0.1 | 22.48 |
| | | | 27.43 |
| 6 | 0.145 | 0.2 | 24.78 |
| | | | 30.13 |
| 7 | 0.248 | 0.0293 | 26.01 |
| | | | 27.56 |
| 8 | 0.248 | 0.171 | 30.07 |
| | | | 31.32 |
| 9 | 0.29 | 0.1 | 34.59 |
| | | | 26.42 |

Table 8: OIT Data for ABS with Antioxidant Formulations

| Sample | Mixed tocopherol product | Irgafos 168 | OIT (min.) |
|---|---|---|---|
| 1 | 0.0 | 0.2 | 7.54 |
| 2 | 0.0849 | 0.0586 | 10.74 |
| 3 | 0.0849 | 0.3414 | 29.12 |
| 4 | 0.29 | 0.0 | 22.78 |
| 5 | 0.29 | 0.2 | 27.83 |
| 6 | 0.29 | 0.4 | 27.59 |
| 7 | 0.495 | 0.586 | 35.34 |
| 8 | 0.495 | 0.3414 | 32.24 |

Example 3: Least Squares Regression Model Analysis of OIT Data

The OIT data from each polypropylene and ABS formulation in Example 2 were regressed to a linear model of the form

$$\ln(OIT) = a + bx_1 + cx_2 + dx_1^2 + ex_2^2 + fx_1x_2$$

wherein

| | |
|---|---|
| $x_1$ = | the level of primary antioxidant in normalized experimental design units |
| $x_2$ = | the level of secondary antioxidant in normalized experimental design units |
| a, b, c, d, e, f= | the coefficients as determined by least squares regression |

As shown in FIG. 1, the response surface for the primary antioxidant, Irganox® 1010, demonstrates a nearly linear increase in the measured OIT as the Irganox® 1010 content of the polypropylene formulation increases. On the other hand, the response surface of the secondary antioxidant, Irgafos 168, shows that it has little impact on OIT except at the highest Irganox® 1010 contents. A regression analysis revealed a significant ($p < 0.01$) effect for only the Irganox® 1010 content, thereby supporting a positive correlation between OIT and the Irganox® 1010 content of the polypropylene formulation. There is no evidence of curvature in either the response surface of FIG. 1 or the regression analysis.

By contrast, the response surface for Irganox® 1010 in ABS copolymer shows a somewhat more complex interaction. As can be seen from FIG. 2, both Irganox® 1010 and Irgafos 168 may contribute toward increasing OIT and may interact in some manner. A regression analysis suggested that the antioxidant effect of Irganox® 1010 was small over the range of samples tested. However, when an unusually low value is dropped from the data set, the regression analysis revealed significant effects for both Irganox® 1010 ($p < 0.01$) and Irgafos 168 ($p = 0.04$). In addition, this modified regressions analysis suggested an interaction between the primary and secondary antioxidants ($p = 0.08$).

As shown in FIG. 3, the response surface for Irganox® E-201 in polypropylene shows a rapid increase in OIT with increasing amount of Irganox® E-201 until approximately 0.2 percent. This increase is followed by a plateau. A response surface of this shape suggests that there is an upper limit for the effective amount of Irganox® E-201 in polypropylene samples. The response surface of Irgafos 168 does not demonstrate a significant antioxidant effect. A regression analysis supported this finding. The regression analysis also failed to show a significant relationship between the amount of Irganox® E-201 and OIT, but it did indicate evidence of curvature.

As can be seen from FIG. 4, the response surface for Irganox® E-201 in ABS is relatively flat. A response surface of this shape suggests that there was no significant antioxidant effect for either Irganox® E-201 or Irgafos 168 in ABS samples. However, the average OIT for ABS samples without an antioxidant was 5.98 minutes. In all samples containing Irganox® E-201, the OIT was at least 8 minutes and all but a single data-point was above 11 minutes. Accordingly, this data might be interpreted to suggest that there was a similar sigmoid response curve for Irganox® E-201 in ABS samples, and that the samples over the range tested were each within the plateau region of the curve. Thus, Irganox® E-201 plateaus at a low amount and at a low OIT value.

As shown in FIG. 5, the response surface for the mixed tocopherol product in polypropylene shows a rapid increase in OIT with increasing amount of the mixed tocopherol product until approximately 0.2 percent by weight. This increase is followed by a plateau. A response surface of this shape suggests that there is an upper limit for the effective amount of the mixed tocopherol product in polypropylene formulations. In addition, the response surface of Irgafos 168 does not show that it exhibited a significant antioxidant effect. A regression analysis supported this conclusion. The regression analysis also failed to show a significant relationship between the amount of the mixed tocopherol product and OIT ($p < 0.01$). In addition, the regression analysis provided evidence of curvature of the response surface.

As can be seen from FIG. 6, the response surface for the mixed tocopherol product in ABS shows a rapid increase in OIT with increasing amount of the mixed tocopherol product. This increase is followed by a plateau. A response surface of this shape suggests that there is an upper limit for the effective amount of the mixed tocopherol product in ABS formulations. In addition, the response surface suggests that Irgafos 168 acted as a significant secondary antioxidant when paired with the mixed tocopherol product. A regression analysis supported this conclusion ($p = 0.08$). The regression analysis also demonstrated a strong antioxidant effect ($p < 0.01$) of the mixed tocopherol product, and suggests a synergistic interaction between a mixed tocopherol product and Irgafos 168 ($p = 0.08$). In addition, the regression provides evidence of curvature ($p = 0.02$).

The results show that the mixed tocopherol product exhibited an unexpectedly strong antioxidant effect in both polypropylene and ABS samples. Only samples containing Irganox® 1010 or the mixed tocopherol product as the primary antioxidant exhibited a positive interaction between the primary antioxidant and secondary antioxidant, Irgafos 168.

In polypropylene samples, the antioxidant effect of the mixed tocopherol product plateaus at approximately 0.2 percent by weight of the sample. When formulated with polypropylene, the mixed tocopherol product exhibited substantially greater antioxidant effect than Irganox® 1010, and similar antioxidant effect as Irganox® E-201. None of these primary antioxidants exhibited a synergistic antioxidant effect when paired with Irgafos 168.

In ABS samples, the antioxidant effect of the mixed tocopherol product reaches a maximum at a much greater additive amount. The maximal antioxidant effect of the mixed tocopherol product was reached at about 0.3 percent to about 0.5 percent by weight of the sample. The mixed tocopherol product surprisingly outperformed both Irganox® 1010 and Irganox® E-201 as a primary antioxidant. In contrast to the synthetic $\alpha$-tocopherol Irganox® E-201, the mixed tocopherol product demonstrated a synergistic antioxidant effect when paired with a secondary antioxidant.

In summary, the mixed tocopherol product was shown to be an effective primary antioxidant when formulated with ABS. In addition, the mixed tocopherol product exhibited a synergistic effect when combined with a secondary antioxidant in an ABS formulation.

<u>Example 4:</u> Preparation of ABS Samples

ABS formulations comprising a mixed tocopherol product, a $\gamma$-rich tocopherol additive, a $\delta$-rich tocopherol additive, Irganox® E-201, Cyanox® 425 (2,2'-Methylenebis(4-ethyl-6-*tert*-butylphenol)) (Cytec Industries Inc., West Paterson, New Jersey), and Cyanox® 2246 (2,2'-Methylenebis(4-methyl-6-tert-butylphenol)) (Cytec Industries Inc., West Paterson, New Jersey), were compounded in a Brabender plasticorder, as described in Example 1. The γ-rich tocopherol additive, the δ-rich tocopherol additive, and the mixed tocopherol product, as described in Example 1, were extracted from soy oil distillates, using methods known in the art.

Example 5: OIT Test Measurements of ABS Samples

OIT test measurements were performed according to Example 2, with some samples done in triplicate. The OIT data are shown below in Table 9.

Table 9: OIT Data for ABS with Antioxidant Formulations

| | Percent By Weight | | | | | | | |
|---|---|---|---|---|---|---|---|---|
| **Antioxidant** | **0.0** | **0.025** | **0.05** | **0.1** | **0.1** | **0.1** | **0.2** | **0.4** |
| NONE | 12.89<br>3.38<br>5.92 | N/A | N/A | N/A | N/A | N/A | N/A | N/A |
| Cyanox® 425 | N/A | 2.57 | 6.25 | 6.12 | 7.64 | 4.98 | 8.27 | 12.6 |
| Cyanox® 2246 | N/A | 2.56 | 7.41 | 6.96 | 6.91 | 6.11 | 5.68 | 12.42 |
| Irganox® E-201 | N/A | 5.12 | 6.33 | 7.17 | 7.20 | 6.05 | 6.35 | 8.05 |
| δ-tocopherol | N/A | 6.53 | 10.20 | 8.94 | 9.05 | 6.91 | 8.64 | 13.91 |
| γ-tocopherol | N/A | 6.46 | 9.14 | 15.84 | 12.52 | 15.55 | 18.17 | 14.4 |
| Mixed Tocopherols | N/A | 5.49 | 8.00 | 18.76 | 17.76 | 8.86 | 16.93 | 17.66 |

Example 6: Linear Re'gression Model Analysis of OIT Data

The OIT data from each ABS sample in Example 5 were simultaneously regressed to a linear model of the form

$$OIT = a + bx_{mt} + cx_{\gamma} + dx_{\delta} + ex_{E\text{-}201} + fx_{C\text{-}425} + gx_{C\text{-}2246}$$

wherein

| | |
|---|---|
| $x_{mt}$ = | weight fraction of mixed tocopherol product |
| $X_{\gamma}$ = | weight fraction of γ-tocopherol additive |
| $x_{\delta}$ = | weight fraction of mixed δ-tocopherol additive |
| $x_{E\text{-}201}$ = | weight fraction of Irganox® E-201 |
| $x_{C\text{-}425}$ = | weight fraction of Cyanox® 425 |
| $x_{C\text{-}2246}$ = | weight fraction of Cyanox® 2246 |
| a, b, c, d, e, f, g = | the coefficients as determined by regression (i.e. representative of the slope of the OIT response to each ABS sample) |

The OIT data were regressed simultaneously to force each intercept of each ABS sample to be the same. The results of the regression are shown below in Table 10, and graphically presented in FIG. 7.

Table 10: Linear Regression Model of OIT Data for ABS with Antioxidant Formulations

| Term | Coefficients (minutes / Percent by weight) | p-value |
|---|---|---|
| Intercept | 6.99 | 1.08E-11 |
| Cyanox® 425 | 9.15 | 0.23 |
| Cyanox® 2246 | 7.40 | 0.33 |
| Irganox® E-201 | 0.70 | 0.93 |
| δ-tocopherol | 15.63 | 0.04 |
| γ-tocopherol | 32.56 | 9.87E-05 |

(continued)

| Term | Coefficients (minutes / Percent by weight) | p-value |
|---|---|---|
| Mixed Tocopherols | 37.37 | 1.36E-05 |

As can be seen from Table 10 and FIG. 7, the only additives that exhibit a significant antioxidant effect, i.e. at a 95 percent level of confidence, were the mixed tocopherol, γ-tocopherol, and δ-tocopherol additives. The regression analysis shows that the mixed tocopherol and γ-tocopherol additives appear approximately equal in effectiveness. By comparison, the δ-tocopherol additive appears to be approximately half as effective. Although the δ-tocopherol additive was statistically significant as compared to ABS samples formulated without antioxidant additives, the δ-tocopherol additive was not statistically more effective than the commercially available additives Irganox® E-201, Cyanox® 425 or Cyanox® 2246. In addition, the regression analysis shows evidence of curvature.

Example 7: Quadratic Regression Model Analysis of OIT Data

The OIT data from each ABS sample in Example 5 were simultaneously regressed to a linear model of the form

$$OIT = a + bx_{mt} + cx_{\gamma} + dx_{\delta} + ex_{E\text{-}201} + fx_{C\text{-}425} + gx_{C\text{-}2246} + hx_{mt}^2 + ix_{\gamma}^2 + jx_{\delta}^2 + kx_{E\text{-}201}^2 + lx_{C\text{-}425}^2 + mx_{C\text{-}2246}^2$$

wherein

| | |
|---|---|
| $x_{mt}$ | = weight fraction of mixed tocopherol product |
| $x_{\gamma}$ = | weight fraction of γ-tocopherol additive |
| $x_{\delta}$ = | weight fraction of mixed δ-tocopherol additive |
| $x_{E\text{-}201}$ = | weight fraction of Irganox® E-201 |
| $X_{C\text{-}425}$ = | weight fraction of Cyanox® 425 |
| $x_{C\text{-}2246}$ = | weight fraction of Cyanox® 2246 |
| a, b, c, d, e, f, g, h, i, j, k, l, m | = the coefficients as determined by regression (i.e. representative of the slope of the OIT response to each ABS sample) |

As in Example 6, the OIT data were regressed simultaneously to force the intercept to be the same for all antioxidant formulations. The results of this quadratic regression are shown below in Table 11, and graphically presented in FIG. 8.

Table 11: Linear Regression Model of Antioxidants in ABS Copolymers

| Term | Coefficients (minutes / Percent by weight) | p-value |
|---|---|---|
| Intercept | 5.77 | 1.17E-07 |
| Cyanox® | 0.87 | 0.96 |
| 425 Cyanox® 2246 | -2.30 | 0.90 |
| Irganox® E-201 | 7.31 | 0.69 |
| δ-tocopherol | 25.83 | 0.16 |
| γ-tocopherol | 104.11 | 2.26E-06 |
| Mixed Tocopherols | 96.99 | 7.10E-06 |
| (Cyanox® 425)$^2$ | 41.49 | 0.40 |
| (Cyanox® 2246)$^2$ | 45.89 | 0.35 |
| (Irganox® E-201)$^2$ | -4.69 | 0.92 |
| (δ-tocopherol)$^2$ | -15.85 | 0.74 |
| (γ-tocopherol)$^2$ | -206.15 | 1.58E-04 |
| (Mixed Tocopherols)$^2$ | -169.14 | 1.34E-03 |

As can be seen from Table 11 and FIG. 8, the only additives that exhibit a significant antioxidant effect, i.e. at a 95 percent level of confidence, were the mixed tocopherol and γ-tocopherol additives. The quadratic regression model and plot capture the rapid increase in OIT and plateau. In addition, this model suggests a decline in OIT as the percent by weight of antioxidants increased. The model also suggests that both the mixed tocopherol and γ-tocopherol additives are significantly better antioxidants than Irganox® E-201, Cyanox® 425, and Cyanox® 2246.

All publications, patents and patent applications identified above are herein incorporated by reference.

The invention being thus described, it will be apparent to those skilled in the art that the same may be varied in many ways without departing from the spirit and scope of the invention. Such variations are included within the scope of the invention to be claimed.

## Claims

**1.** A composition comprising:

(i) ABS; and
(ii) a γ-rich tocopherol additive, such that the composition has a minimum amount of γ-tocopherol of 25, ppm by weight of the composition.

**2.** The composition of claim 1, wherein the tocopherol additive is present at 50 ppm to 10,000 ppm by weight of the composition.

**3.** The composition of claim 1, wherein the tocopherol additive is present at 1,000 ppm to 4,000 ppm by weight of the composition.

**4.** The composition of claim 1, wherein the tocopherol additive is present at 3,000 ppm to 4,000 ppm by weight of the composition.

**5.** The composition of claim 1, wherein the tocopherol additive further comprises one or more tocopherol(s) independently selected from α-tocopherol, β-tocopherol, γ- tocopherol and δ-tocopherol.

**6.** The composition of claim 1, which comprises γ-tocopherol at 25 ppm to 7,000 ppm by weight of the composition.

**7.** The composition of claim 1, wherein the tocopherol additive comprises 2 percent to 22 percent α-tocopherol, 0 percent to 3 percent β-tocopherol, 55 percent to 70 percent γ-tocopherol, and 10 percent to 32 percent δ-tocopherol, by weight of the tocopherol additive.

**8.** The composition of claim 1, wherein the tocopherol additive comprises 3 percent to 22 percent α-tocopherol, 0 percent to 2 percent β-tocopherol, 59 percent to 69 percent γ-tocopherol, and 12 percent to 26 percent δ-tocopherol, by weight of the tocopherol,additive.

**9.** The composition of claim 1, wherein the tocopherol additive comprises 12 percent α-tocopherol, 1 percent β-tocopherol, 65 percent γ-tocopherol, and 20 percent δ-tocopherol, by weight of the tocopherol additive.

**10.** The composition of claim 1, wherein the tocopherol additive is extracted from a byproduct of a vegetable oil refining process and optionally purified.

**11.** The composition of claim 10, wherein the byproduct is a deodorizer distillate.

**12.** The composition of claim 10, wherein the byproduct is derived from soy oil.

**13.** The composition of claim 1, further comprising one or more antioxidant(s).

**14.** The composition of claim 13, wherein the one or more antioxidant(s) is/are secondary antioxidant(s)

**15.** The composition of claim 14, wherein the secondary antioxidant(s) is/are independently selected from thioesters, organophosphorus compounds, phosphites and phosphonates

**16.** The composition of claim 14, wherein the secondary antioxidant(s) is/are independently selected from dilauryl thiodipropionate, distearyl thiodipropionate, dimyrstyl thiodipropionate, didodecyl 3,3'-thiodipropionate, dioctadecyl 3,3'-thiodipropionate, tris(nonylphenyl)phosphite, tris(2,4-di-tert- butylphenyl)phosphate, and tetrakis(2,4-di-*tert*-butylphenyl)[1,1-biphenyl]-4,4'- diylbisphosphonite

**17.** A composition comprising:

(i) ABS; and
(ii) γ-tocopherol at a minimum amount of 25 ppm by weight of the composition.

**18.** A method for preparing a composition, which comprises combining a γ-tocopherol, or a γ-rich tocopherol additive, at a minimum amount of 25 ppm by weight of the composition, with at least one of (i) an ABS; or (ii) a butadiene-containing elastomer and either acrylonitrile and styrene monomers, or a styrene-acrylonitnle copolymer

**19.** The method of claim 18, which further compnses polymerizing the acrylonitrile and styrene monomers, or the styrene-acrylonitrile copolymer, in the presence of the butadiene-containing elastomer.

**20.** The method of claim 18, wherein the tocopherol additive is present at 50 ppm to 10,000 ppm by weight of the composition

**21.** The method of claim 18, wherein the tocopherol additive is present at 1,000 ppm to 4,000 ppm by weight of the composition.

**22.** The method of claim 18, wherein the tocopherol additive is present at 3,000 ppm to 4,000 ppm by weight of the composition.

**23.** The method of claim 18, wherein the tocopherol additive further comprises one or more tocopherol (s) independently selected from α-tocopherol, β-tocopherol, γ-tocopherol and δ-tocopherol.

**24.** The method of claim 18, wherein the composition comprises γ-tocopherol at 25 ppm to 7,000 ppm by weight of the composition.

**25.** The method of claim 18, wherein the tocopherol additive comprises about 2 percent to 22 percent α-tocopherol, 0 percent to 3 percent β-tocopherol, 55 percent to 70 percent γ-tocopherol, and 10 percent to 32 percent δ-tocopherol, by weight of the tocopherol additive.

**26.** The method of claim 18, wherein the tocopherol additive comprises about 3 percent to 22 percent α-tocopherol, 0 percent to about 2 percent β-tocopherol, 59 percent to 69 percent γ-tocopherol, and 12 percent to 26 percent δ-tocopherol, by weight of the tocopherol additive.

**27.** The method of claim 18, wherein the tocopherol additive comprises 12 percent α-tocopherol, 1 percent β-tocopherol, 65 percent γ-tocopherol, and 20 percent δ-tocopherol, by weight of the tocopherol additive.

**28.** The method of claim 18, wherein the tocopherol additive is extracted from a byproduct of a vegetable oil refining process and optionally purified.

**29.** The method of claim 28, wherein the byproduct is a deodorizer distillate.

**30.** The method of claim 28, wherein the byproduct is derived from soy oil.

**31.** The method of claim 18, which further comprises combining the acrylonitrile and styrene monomers, styrene-acrylonitrile copolymer, butadiene-containing elastomer and/or ABS polymer with one or more antioxidant(s).

**32.** The method of claim 31, wherein the one or more antioxidant(s) is/are secondary antioxidant(s).

**33.** The method of claim 32, wherein the secondary antioxidant(s) is/are independently selected from thioesters, organophosphorus compounds, phosphites and phosphonates.

**34.** The method of claim 32, wherein the secondary antioxidant(s) is/are independently selected from dilauryl thiodipropionate, distearyl thiodipropionate, dimyrstyl thiodipropionate, didodecyl 3,3'-thiodipropionate, dioctadecyl 3,3'-thiodipropionate, tris(nonylphenyl)phosphite, tris(2,4-di-*tert*- butylphenyl)phosphate, and tetrakis(2,4-di-*tert*-butylphenyl)[1,1-biphenyl]-4,4'- diylbisphosphonite.

**35.** A method for stabilizing ABS, which comprises combining a γ-tocopherol, or a γ-rich tocopherol additive, at a minimum amount of 25 ppm with by weight of the composition, with at least one of (i) an ABS; or (ii) a butadiene-containing elastomer and either acrylonitrile and styrene monomers, or a styrene-acrylonitrile copolymer.

## Patentansprüche

**1.** Zusammensetzung, umfassend:

(i) ABS; und
(ii) ein γ-reiches Tocopheroladditiv, so dass die Zusammensetzung eine minimale Menge an γ-Tocopherol von 25 ppm, bezogen auf das Gewicht der Zusammensetzung, aufweist.

**2.** Zusammensetzung gemäß Anspruch 1, wobei das Tocopheroladditiv zu 50 ppm bis 10 000 ppm, bezogen auf das Gewicht der Zusammensetzung, vorliegt.

**3.** Zusammensetzung gemäß Anspruch 1, wobei das Tocopheroladditiv zu 1 000 ppm bis 4 000 ppm, bezogen auf das Gewicht der Zusammensetzung, vorliegt.

**4.** Zusammensetzung gemäß Anspruch 1, wobei das Tocopheroladditiv zu 3 000 ppm bis 4 000 ppm, bezogen auf das Gewicht der Zusammensetzung, vorliegt.

**5.** Zusammensetzung gemäß Anspruch 1, wobei das Tocopheroladditiv ferner ein oder mehrere Tocopherol(e) umfasst, die unabhängig aus α-Tocopherol, β-Tocopherol, γ-Tocopherol und δ-Tocopherol gewählt sind.

**6.** Zusammensetzung gemäß Anspruch 1, welche γ-Tocopherol zu 25 ppm bis 7 000 ppm, bezogen auf das Gewicht der Zusammensetzung, umfasst.

**7.** Zusammensetzung gemäß Anspruch 1, wobei das Tocopheroladditiv 2 Prozent bis 22 Prozent α-Tocopherol, 0 Prozent bis 3 Prozent β-Tocopherol, 55 Prozent bis 70 Prozent γ-Tocopherol und 10 Prozent bis 32 Prozent δ-Tocopherol, bezogen auf das Gewicht des Tocopheroladditivs, umfasst.

**8.** Zusammensetzung gemäß Anspruch 1, wobei das Tocopheroladditiv 3 Prozent bis 22 Prozent α-Tocopherol, 0 Prozent bis 2 Prozent β-Tocopherol, 59 Prozent bis 69 Prozent γ-Tocopherol und 12 Prozent bis 26 Prozent δ-Tocopherol, bezogen auf das Gewicht des Tocopheroladditivs, umfasst.

**9.** Zusammensetzung gemäß Anspruch 1, wobei das Tocopheroladditiv 12 Prozent α-Tocopherol, 1 Prozent β-Tocopherol, 65 Prozent γ-Tocopherol und 20 Prozent δ-Tocopherol, bezogen auf das Gewicht des Tocopheroladditivs, umfasst.

**10.** Zusammensetzung gemäß Anspruch 1, wobei das Tocopheroladditiv aus einem Nebenprodukt von einem Pflanzenöl-Veredlungsverfahren extrahiert wird und gegebenenfalls gereinigt wird.

**11.** Zusammensetzung gemäß Anspruch 10, wobei das Nebenprodukt ein Deodorisierungsmitteldestillat ist.

**12.** Zusammensetzung gemäß Anspruch 10, wobei das Nebenprodukt von Soyaöl abgeleitet ist.

**13.** Zusammensetzung gemäß Anspruch 1, welche ferner ein oder mehrere Antioxidat(ien) umfasst.

**14.** Zusammensetzung gemäß Anspruch 13, wobei das eine oder die mehreren Antioxidat(ien) sekundäre(s) Antioxidat (ien) ist/sind.

**15.** Zusammensetzung gemäß Anspruch 14, wobei das/die sekundäre(n) Antioxidat(ien) unabhängig gewählt ist/sind von Thioestern, Organophosphorverbindungen, Phosphiten und Phosphonaten.

**16.** Zusammensetzung gemäß Anspruch 14, wobei das/die sekundäre(n) Antioxidat(ien) unabhängig gewählt ist/sind von Dilaurylthiodipropionat, Distearylthiodipropionat, Dimyrstylthiodipropionat, Didodecyl-3,3'-thiodipropionat, Dioctadecyl-3,3'-thiodipropionat, Tris(nonylphenyl)phosphit, Tris(2,4-di-*tert*-butylphenyl)phosphat und Tetrakis(2,4-di-*tert*-butylphenyl)-[1,1-biphenyl]-4,4'-diylbisphosphonit.

**17.** Zusammensetzung, umfassend:

(i) ABS; und
(ii) γ-Tocopherol in einer minimalen Menge von 25 ppm, bezogen auf das Gewicht der Zusammensetzung.

**18.** Verfahren zur Herstellung einer Zusammensetzung, welches das Vereinigen eines γ-Tocopherols oder eines γ-reichen Tocopheroladditivs in einer minimalen Menge von 25 ppm, bezogen auf das Gewicht der Zusammensetzung, mit mindestens einem von (i) einem ABS; oder (ii) einem Butadien-haltigem Elastomer und entweder Acrylnitril- oder Styrolmonomeren oder einem Styrol-Acrylnitril-Copolymer umfasst.

**19.** Verfahren gemäß Anspruch 18, welches ferner das Polymerisieren des Acrylnitril- und Styrolmonomeren oder des Styrol-Acrylnitril-Copolymeren in Gegenwart des Butadien-haltigen Elastomeren umfasst.

**20.** Verfahren gemäß Anspruch 18, wobei das Tocopheroladditiv zu 50 ppm bis 10 000 ppm, bezogen auf das Gewicht der Zusammensetzung, vorliegt.

**21.** Verfahren gemäß Anspruch 18, wobei das Tocopheroladditiv zu 1 000 ppm bis 4 000 ppm, bezogen auf das Gewicht der Zusammensetzung, vorliegt.

**22.** Verfahren gemäß Anspruch 18, wobei das Tocopheroladditiv zu 3 000 ppm bis 4 000 ppm, bezogen auf das Gewicht der Zusammensetzung, vorliegt.

**23.** Verfahren gemäß Anspruch 18, wobei das Tocopheroladditiv ferner ein oder mehrere Tocopherol(e) umfasst, die unabhängig aus α-Tocopherol, β-Tocopherol, γ-Tocopherol und δ-Tocopherol gewählt sind.

**24.** Verfahren gemäß Anspruch 18, wobei die Zusammensetzung γ-Tocopherol zu 25 ppm bis 7 000 ppm, bezogen auf das Gewicht der Zusammensetzung, umfasst.

**25.** Verfahren gemäß Anspruch 18, wobei das Tocopheroladditiv etwa 2 Prozent bis 22 Prozent α-Tocopherol, 0 Prozent bis 3 Prozent β-Tocopherol, 55 Prozent bis 70 Prozent γ-Tocopherol und 10 Prozent bis 32 Prozent δ-Tocopherol, bezogen auf das Gewicht des Tocopheroladditivs, umfasst.

**26.** Verfahren gemäß Anspruch 18, wobei das Tocopheroladditiv etwa 3 Prozent bis 22 Prozent α-Tocopherol, 0 Prozent bis etwa 2 Prozent β-Tocopherol, 59 Prozent bis 69 Prozent γ-Tocopherol und 12 Prozent bis 26 Prozent δ-Tocopherol, bezogen auf das Gewicht des Tocopheroladditivs, umfasst.

**27.** Verfahren gemäß Anspruch 18, wobei das Tocopheroladditiv 12 Prozent α-Tocopherol, 1 Prozent β-Tocopherol, 65 Prozent γ-Tocopherol und 20 Prozent δ-Tocopherol, bezogen auf das Gewicht des Tocopheroladditivs, umfasst.

**28.** Verfahren gemäß Anspruch 18, wobei das Tocopheroladditiv aus einem Nebenprodukt von einem Pflanzenöl-Veredlungsverfahren extrahiert wird und gegebenenfalls gereinigt wird.

**29.** Verfahren gemäß Anspruch 28, wobei das Nebenprodukt ein Deodorisierungsmitteldestillat ist.

**30.** Verfahren gemäß Anspruch 28, wobei das Nebenprodukt von Soyaöl abgeleitet ist.

**31.** Verfahren gemäß Anspruch 18, welches ferner das Vereinigen von (den) Acrylnitril- und Styrolmonomeren, Styrol-Acrylnitril-Copolymer, Butadien-haltigem Elastomer und/oder ABS-Polymer mit einem oder mehreren Antioxidat (ien) umfasst.

**32.** Verfahren gemäß Anspruch 31, wobei das eine oder die mehreren Antioxidat(ien) sekundäre(s) Antioxidat(ien) ist/sind.

**33.** Verfahren gemäß Anspruch 32, wobei das/die sekundäre(n) Antioxidat(ien) unabhängig gewählt ist/sind von Thioestern, Organophosphorverbindungen, Phosphiten und Phosphonaten.

**34.** Verfahren gemäß Anspruch 32, wobei das/die sekundäre(n) Antioxidat(ien) unabhängig gewählt ist/sind von Dilaurylthiodipropionat, Distearylthiodipropionat, Dimyrstylthiodipropionat, Didodecyl-3,3'-thiodipropionat, Dioctadecyl-3,3'-thiodipropionat, Tris(nonylphenyl)phosphit, Tris(2,4-di-*tert*-butylphenyl)phosphat und Tetrakis(2,4-di-*tert*-butylphenyl)-[1,1-biphenyl]-4,4'-diylbisphosphonit.

**35.** Verfahren zur Stabilisierung von ABS, welches das Vereinigen eines γ-Tocopherols oder eines γ-reichen Tocopheroladditivs in einer minimalen Menge von 25 ppm, bezogen auf das Gewicht der Zusammensetzung, mit mindestens einem von (i) einem ABS; oder (ii) einem Butadien-haltigem Elastomer und entweder Acrylnitril- oder Styrolmonomeren oder einem Styrol-Acrylnitril-Copolymer umfasst.

## Revendications

**1.** Composition comprenant :

(i) de l'ABS ; et
(ii) un additif de tocophérol riche en γ-tocophérol, de telle sorte que la composition a une quantité minimum de γ-tocophérol de 25 ppm en poids de la composition.

**2.** Composition selon la revendication 1, dans laquelle l'additif de tocophérol est présent à hauteur de 50 ppm à 10 000 ppm en poids de la composition.

**3.** Composition selon la revendication 1, dans laquelle l'additif de tocophérol est présent à hauteur de 1 000 ppm à 4 000 ppm en poids de la composition.

**4.** Composition selon la revendication 1, dans laquelle l'additif de tocophérol est présent à hauteur de 3 000 ppm à 4 000 ppm en poids de la composition.

**5.** Composition selon la revendication 1, dans laquelle l'additif de tocophérol comprend en outre un ou plusieurs tocophérol(s) choisi(s) indépendamment parmi l'α-tocophérol, le β-tocophérol, le γ-tocophérol et le δ-tocophérol.

**6.** Composition selon la revendication 1, qui comprend du γ-tocophérol à hauteur de 25 ppm à 7 000 ppm en poids de la composition.

**7.** Composition selon la revendication 1, dans laquelle l'additif de tocophérol comprend 2 pour cent à 22 pour cent d'α-tocophérol, 0 pour cent à 3 pour cent de β-tocophérol, 55 pour cent à 70 pour cent de γ-tocophérol et 10 pour cent à 32 pour cent de δ-tocophérol, en poids de l'additif de tocophérol.

**8.** Composition selon la revendication 1, dans laquelle l'additif de tocophérol comprend 3 pour cent à 22 pour cent d'α-tocophérol, 0 pour cent à 2 pour cent de β-tocophérol, 59 pour cent à 69 pour cent de γ-tocophérol et 12 pour cent à 26 pour cent de δ-tocophérol, en poids de l'additif de tocophérol.

**9.** Composition selon la revendication 1, dans laquelle l'additif de tocophérol comprend 12 pour cent d'α-tocophérol, 1 pour cent de β-tocophérol, 65 pour cent de γ-tocophérol et 20 pour cent de δ-tocophérol, en poids de l'additif de tocophérol.

**10.** Composition selon la revendication 1, dans laquelle l'additif de tocophérol est extrait d'un sous-produit d'un procédé de raffinage d'une huile végétale et facultativement purifié.

**11.** Composition selon la revendication 10, dans laquelle le sous-produit est un distillat d'un désodorisant.

**12.** Composition selon la revendication 10, dans laquelle le sous-produit est un dérivé d'huile de soja.

**13.** Composition selon la revendication 1, comprenant en outre un ou plusieurs antioxydant(s).

**14.** Composition selon la revendication 13, dans laquelle l'un ou plusieurs antioxydant(s) est/sont un ou des antioxydant (s) secondaire(s).

**15.** Composition selon la revendication 14, dans laquelle le/les antioxydant(s) secondaire(s) est/sont indépendamment choisi(s) parmi des thioesters, des composés organophosphorés, des phosphites et des phosphonates.

**16.** Composition selon la revendication 14, dans laquelle le/les antioxydant(s) sécondaire(s) est/sont indépendamment choisi(s) parmi le thiodipropionate de dilauryle, le thiodipropionate de distéaryle, le thiodipropionate de dimyristyle, le 3,3'-thiodipropionate de didodécyle, le 3,3'-thiodipropionate de dioctadécyle, le tris(nonylphényl)phosphite, le tris (2,4-di-*tert*-butylphényl)phosphate et le tétrakis(2,4-di-*tert*-butylphényl)[1,1-biphényl]-4,4'-diylbisphosphonite.

**17.** Composition comprenant :

(i) de l'ABS ; et
(ii) du $\gamma$-tocophérol dans une quantité minimum de 25 ppm en poids de la composition.

**18.** Procédé de préparation d'une composition, qui comprend la combinaison d'un additif de $\gamma$-tocophérol ou d'un additif de tocophérol riche en $\gamma$-tocophérol, dans une quantité minimum de 25 ppm en poids de la composition, avec au moins l'un de (i) un ABS ; ou (ii) un élastomère contenant du butadiène et soit des monomères d'acrylonitrile et de styrène, soit un copolymère de styrène-acrylonitrile.

**19.** Procédé selon la revendication 18, qui comprend en outre la polymérisation des monomères d'acrylonitrile et de styrène, ou du copolymère de styrène-acrylonitrile, en présence de l'élastomère contenant du butadiène.

**20.** Procédé selon la revendication 18, dans lequel l'additif de tocophérol est présent à hauteur de 50 ppm à 10 000 ppm en poids de la composition.

**21.** Procédé selon la revendication 18, dans lequel l'additif de tocophérol est présent à hauteur de 1 000 ppm à 4 000 ppm en poids de la composition.

**22.** Procédé selon la revendication 18, dans lequel l'additif de tocophérol est présent à hauteur de 3 000 ppm à 4 000 ppm en poids de la composition.

**23.** Procédé selon la revendication 18, dans lequel l'additif de tocophérol comprend en outre un ou plusieurs tocophérol (s) choisi(s) indépendamment parmi l'$\alpha$-tocophérol, le $\beta$-tocophérol, le $\gamma$-tocophérol et le $\delta$-tocophérol.

**24.** Procédé selon la revendication 18, dans lequel la composition comprend du $\gamma$-tocophérol à hauteur de 25 ppm à 7 000 ppm en poids de la composition.

**25.** Procédé selon la revendication 18, dans lequel l'additif de tocophérol comprend environ 2 pour cent à 22 pour cent d'$\alpha$-tocophérol, 0 pour cent à 3 pour cent de $\beta$-tocophérol, 55 pour cent à 70 pour cent de $\gamma$-tocophérol et 10 pour cent à 32 pour cent de $\delta$-tocophérol, en poids de l'additif de tocophérol.

**26.** Procédé selon la revendication 18, dans lequel l'additif de tocophérol comprend environ 3 pour cent à 22 pour cent d'$\alpha$-tocophérol, 0 pour cent à 2 pour cent de $\beta$-tocophérol, 59 pour cent à 69 pour cent de $\gamma$-tocophérol et 12 pour cent à 26 pour cent de $\delta$-tocophérol, en poids de l'additif de tocophérol.

**27.** Procédé selon la revendication 18, dans lequel l'additif de tocophérol comprend 12 pour cent d'$\alpha$-tocophérol, 1 pour cent de $\beta$-tocophérol, 65 pour cent de $\gamma$-tocophérol, et 20 pour cent de $\delta$-tocophérol, en poids de l'additif de tocophérol.

**28.** Procédé selon la revendication 18, dans lequel l'additif de tocophérol est extrait d'un sous-produit d'un procédé de raffinage d'une huile végétale et facultativement purifié.

**29.** Procédé selon la revendication 28, dans lequel le sous-produit est un distillat d'un désodorisant.

**30.** Procédé selon la revendication 28, dans lequel le sous-produit est un dérivé d'huile de soja.

**31.** Procédé selon la revendication 18, qui comprend en outre la combinaison des monomères d'acrylonitrile et de styrène, du copolymère de styrène-acrylonitrile, de l'élastomère contenant du butadiène et/ou du polymère d'ABS avec un ou plusieurs antioxydant(s).

**32.** Procédé selon la revendication 31, dans lequel l'un ou plusieurs antioxydant(s) est/sont un ou des antioxydant(s) secondaire(s).

**33.** Procédé selon la revendication 32, dans lequel le/les antioxydant(s) secondaire(s) est/sont indépendamment choisi (s) parmi des thioesters, des composés organophosphorés, des phosphites et des phosphonates.

**34.** Procédé selon la revendication 32, dans lequel le/les antioxydant(s) secondaire(s) est/sont indépendamment choisi (s) parmi le thiodipropionate de dilauryle, le thiodipropionate de distéaryle, le thiodipropionate de dimyristyle, le 3,3'-thiodipropionate de didodécyle, le 3,3'-thiodipropionate de dioctadécyle, le tris(nonylphényl)phosphite, le tris(2,4-di-*tert*-butylphényl)phosphate et le tétrakis(2,4-di-*tert*-butylphényl)[1,1-biphényl]-4,4'-diylbisphosphonite.

**35.** Procédé de stabilisation d'ABS, qui comprend la combinaison d'un additif de γ-tocophérol ou d'un additif de tocophérol riche en γ-tocophérol, dans une quantité minimum de 25 ppm en poids de la composition, avec au moins l'un de (i) un ABS ; ou (ii) un élastomère contenant du butadiène et soit des monomères d'acrylonitrile et de styrène, soit un copolymère de styrène-acrylonitrile.

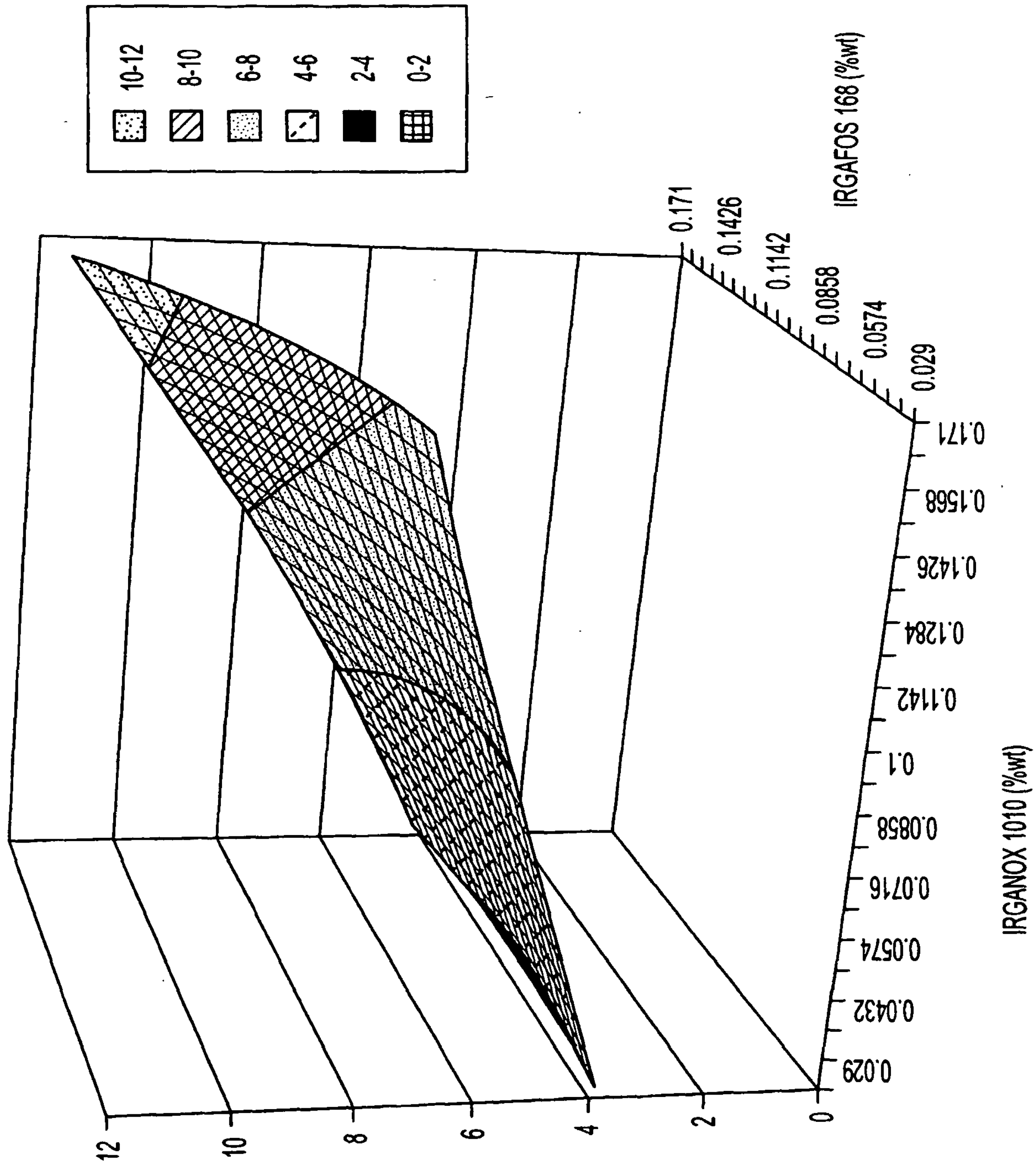
10-12
8-10
6-8
4-6
2-4
0-2
IRGAFOS 168 (%wt)
0.171
0.1426
0.1142
0.0858
0.0574
0.029
IRGANOX 1010 (%wt)
0.171
0.1568
0.1426
0.1284
0.1142
0.1
0.0858
0.0716
0.0574
0.0432
0.029
OIT (min)
12
10
8
6
4
2
0

FIG. 1

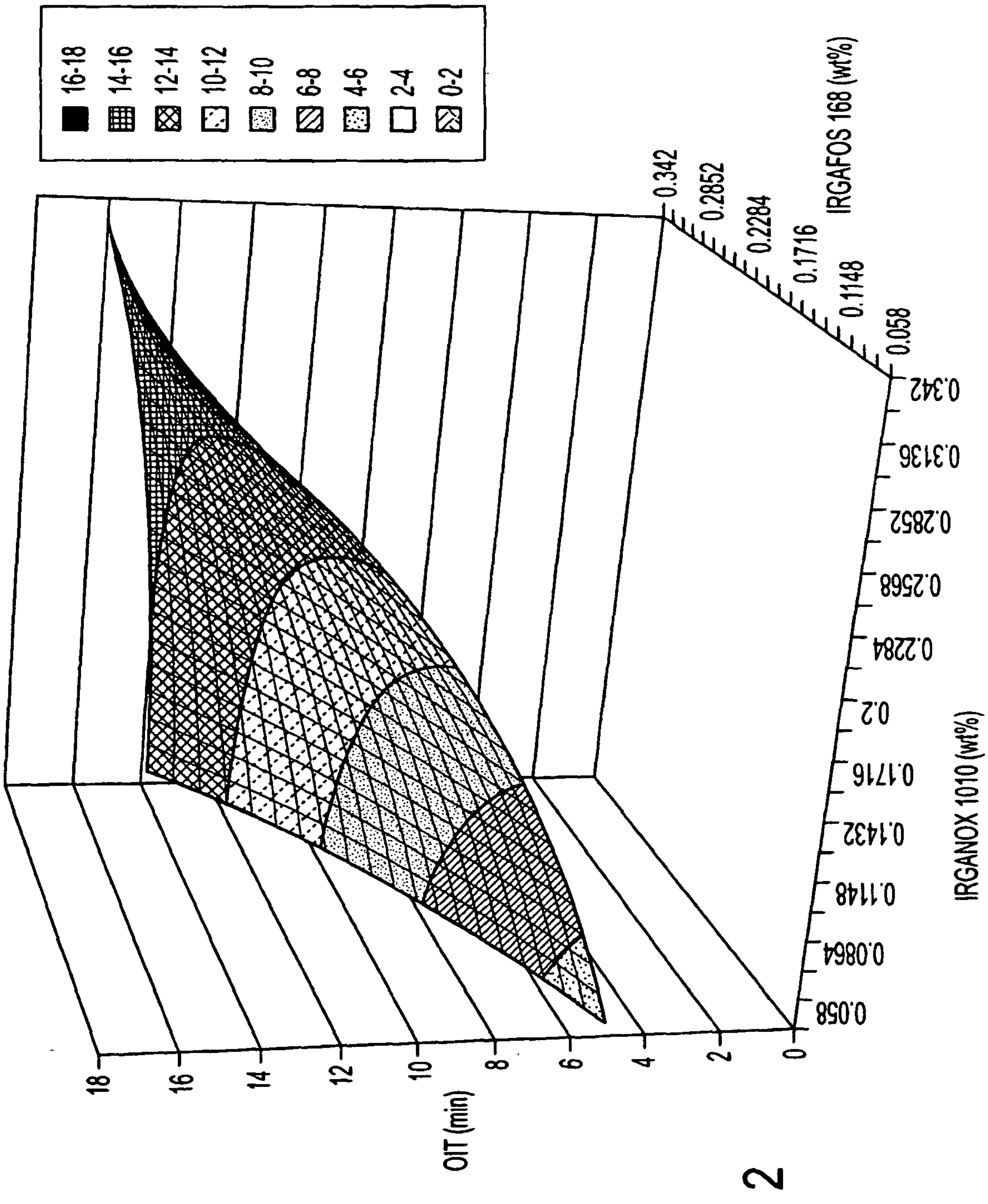
16-18
14-16
12-14
10-12
8-10
6-8
4-6
2-4
0-2
OIT (min)
18
16
14
12
10
8
6
4
2
0
0.058
0.0864
0.1148
0.1432
0.1716
0.2
0.2284
0.2568
0.2852
0.3136
0.342
IRGANOX 1010 (wt%)
0.058
0.1148
0.1716
0.2284
0.2852
0.342
IRGAFOS 168 (wt%)

FIG. 2

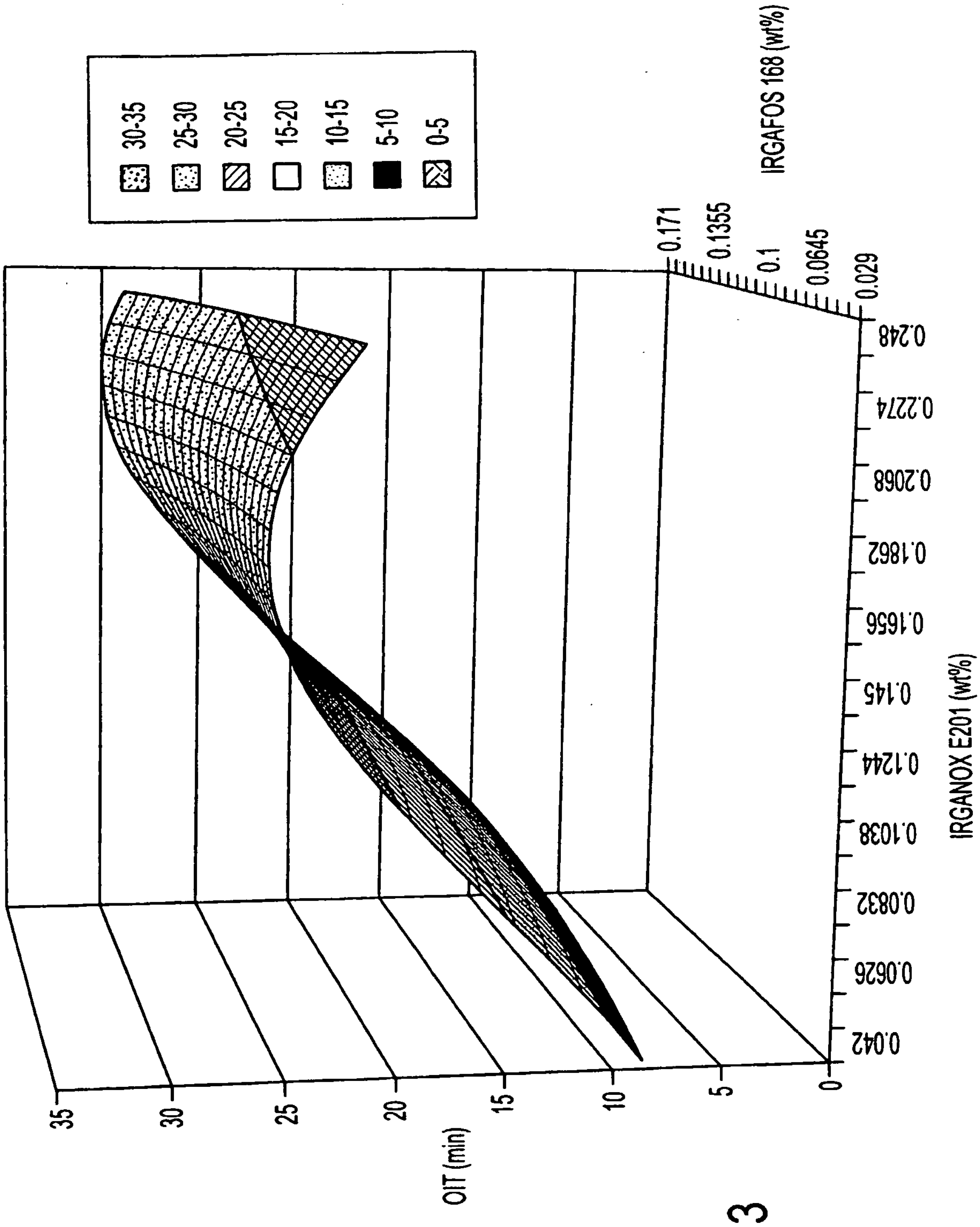
30-35
25-30
20-25
15-20
10-15
5-10
0-5
IRGAFOS 168 (wt%)
0.171
0.1355
0.1
0.0645
0.029
IRGANOX E201 (wt%)
0.042
0.0626
0.0832
0.1038
0.1244
0.145
0.1656
0.1862
0.2068
0.2274
0.248
OIT (min)
0
5
10
15
20
25
30
35

FIG. 3

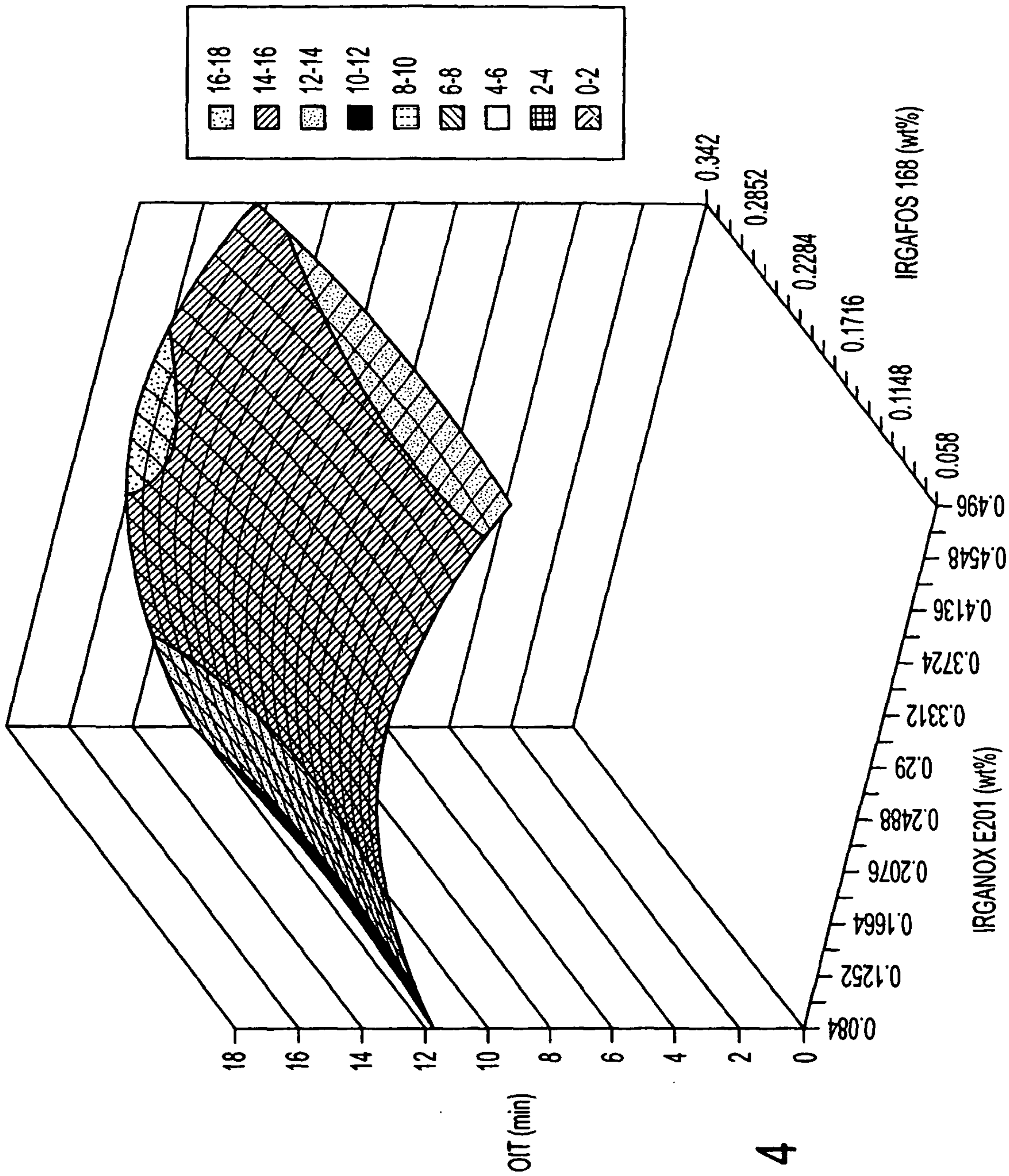
16-18
14-16
12-14
10-12
8-10
6-8
4-6
2-4
0-2
OIT (min)
18
16
14
12
10
8
6
4
2
0
0.084
0.1252
0.1664
0.2076
0.2488
0.29
0.3312
0.3724
0.4136
0.4548
0.496
IRGANOX E201 (wt%)
0.058
0.1148
0.1716
0.2284
0.2852
0.342
IRGAFOS 168 (wt%)

FIG. 4

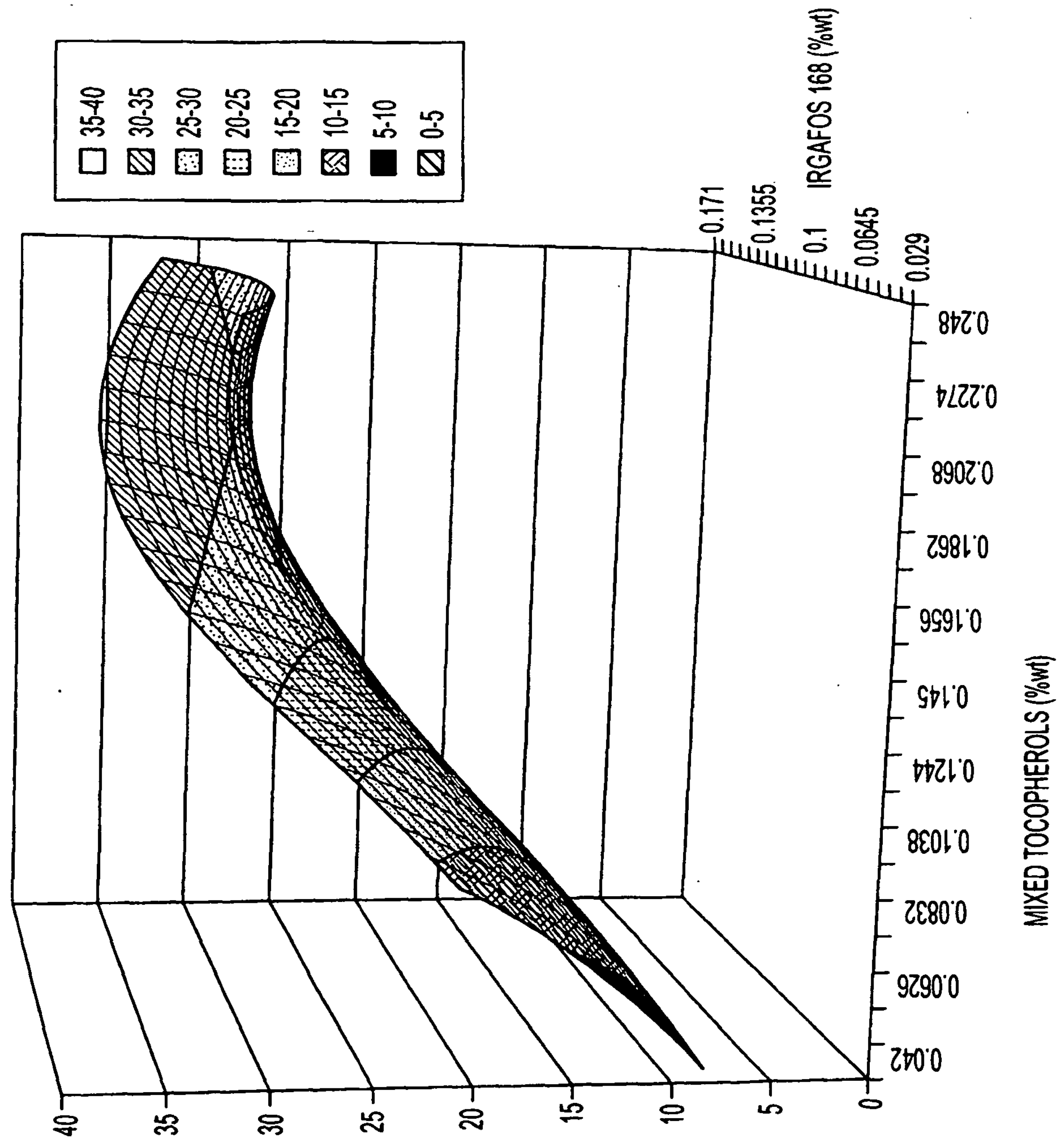
35-40
30-35
25-30
20-25
15-20
10-15
5-10
0-5
OIT (min)
0
5
10
15
20
25
30
35
40
MIXED TOCOPHEROLS (%wt)
0.042
0.0626
0.0832
0.1038
0.1244
0.145
0.1656
0.1862
0.2068
0.2274
0.248
IRGAFOS 168 (%wt)
0.029
0.0645
0.1
0.1355
0.171

FIG. 5

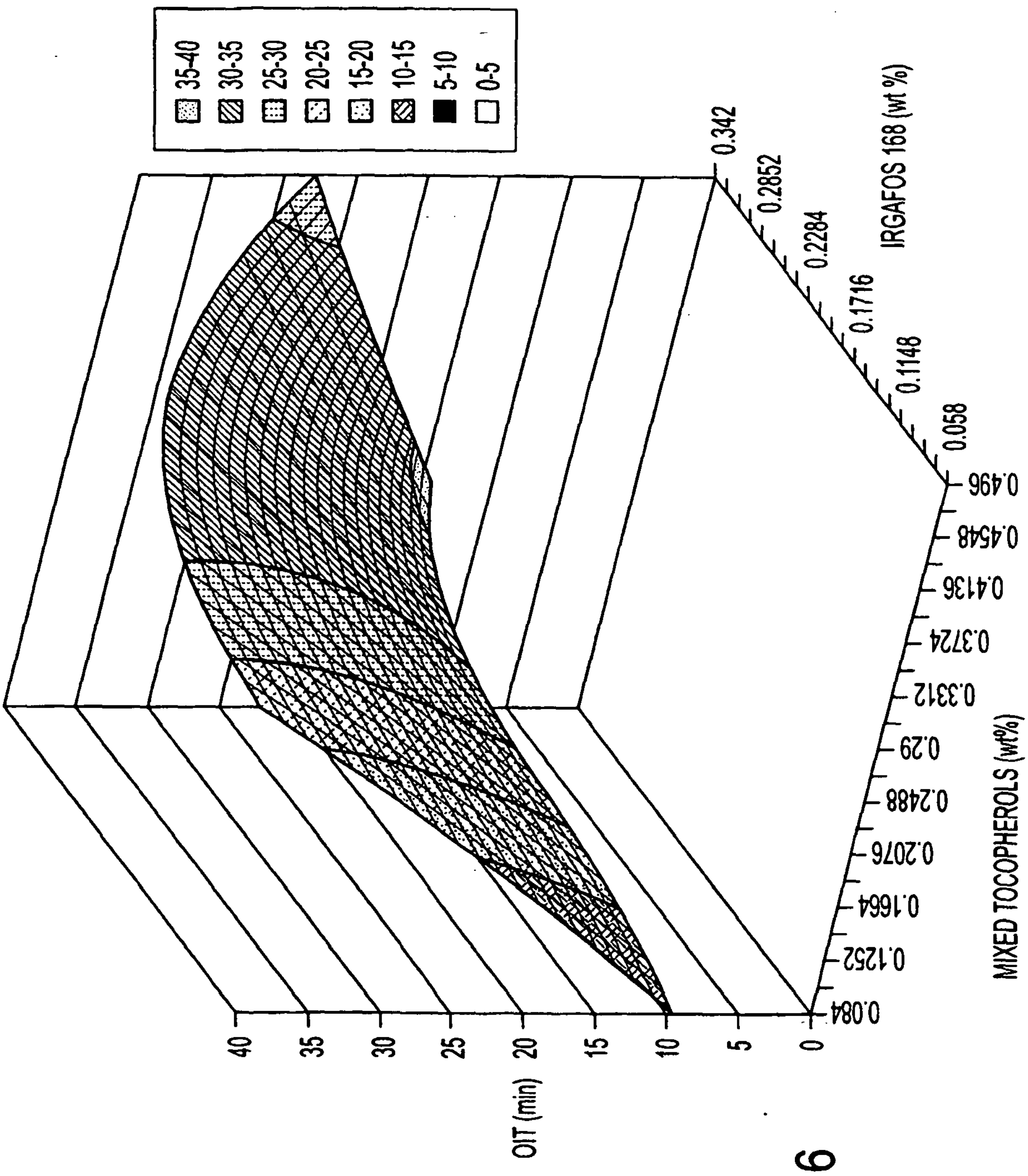
35-40
30-35
25-30
20-25
15-20
10-15
5-10
0-5
OIT (min)
0
5
10
15
20
25
30
35
40
MIXED TOCOPHEROLS (wt%)
0.084
0.1252
0.1664
0.2076
0.2488
0.29
0.3312
0.3724
0.4136
0.4548
0.496
IRGAFOS 168 (wt %)
0.058
0.1148
0.1716
0.2284
0.2852
0.342

FIG. 6

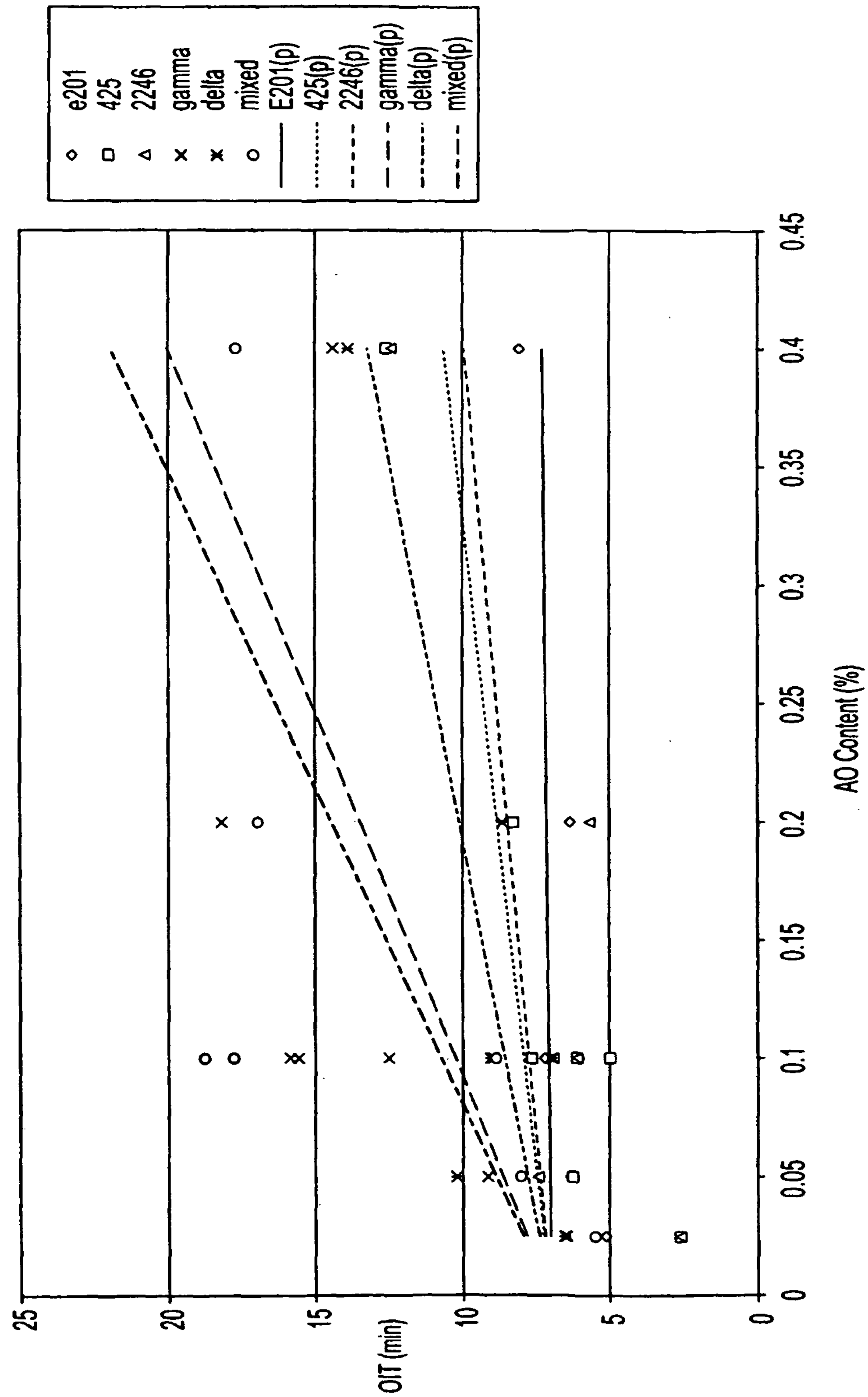

OIT (min)
AO Content (%)
0
5
10
15
20
25
0
0.05
0.1
0.15
0.2
0.25
0.3
0.35
0.4
0.45
e201
425
2246
gamma
delta
mixed
E201(p)
425(p)
2246(p)
gamma(p)
delta(p)
mixed(p)


FIG. 7

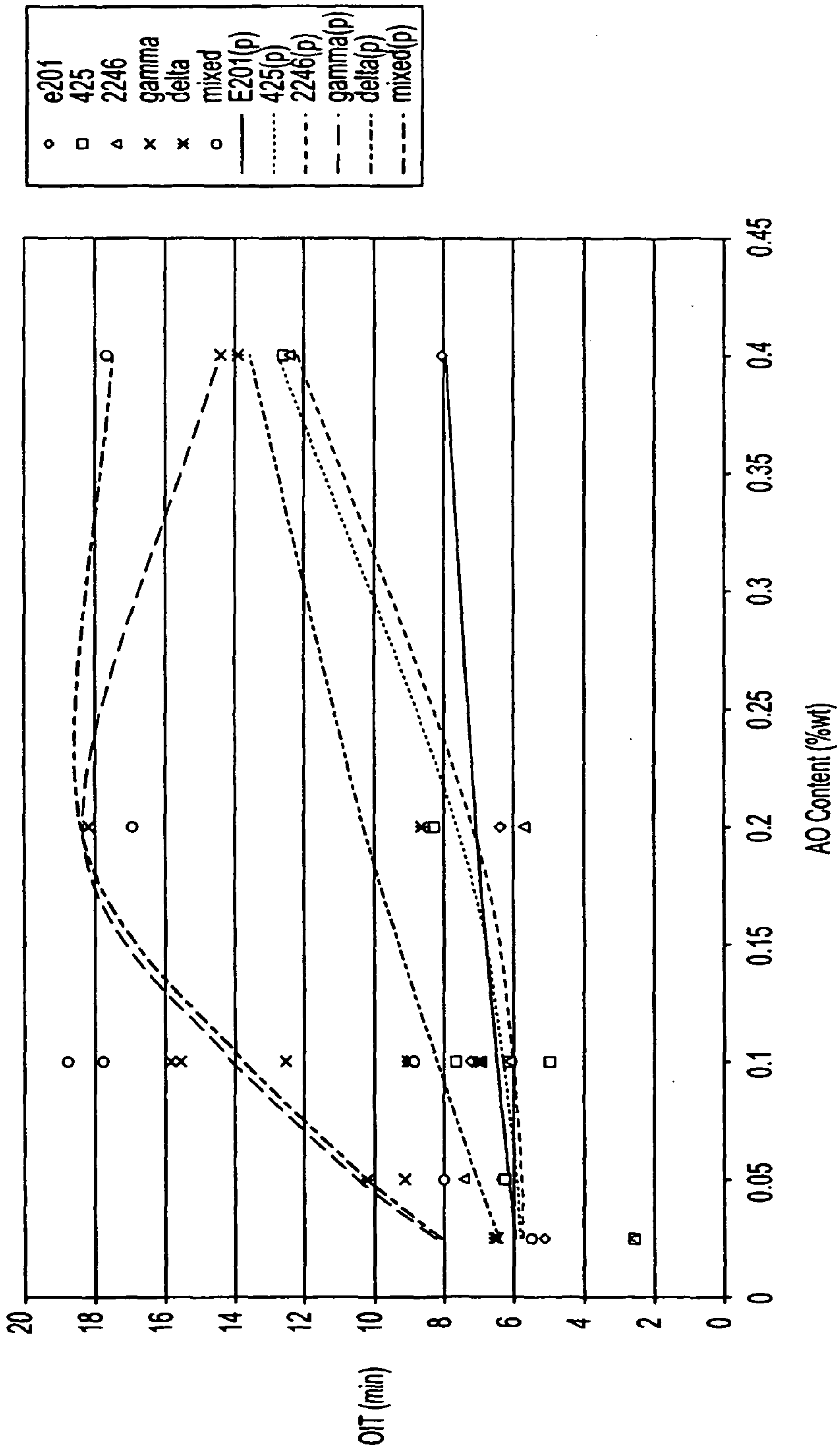

e201
425
2246
gamma
delta
mixed
E201(p)
425(p)
2246(p)
gamma(p)
delta(p)
mixed(p)
OIT (min)
0
2
4
6
8
10
12
14
16
18
20
AO Content (%wt)
0
0.05
0.1
0.15
0.2
0.25
0.3
0.35
0.4
0.45


FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 60287804 P
- US 20040047970 A
- US 4233209 A
- US 4013621 A
- US 6492467 B
- US 6228938 B
- US 5741853 A
- US 5719232 A
- US 5470915 A
- US 5414045 A
- US 5223577 A
- US 5075375 A
- US 4740560 A
- US 5290836 A
- US 4518795 A
- US 4468499 A


### Non-patent literature cited in the description


- **TONY WHELAN.** Polymer Technology Dictionary. Chapman & Hall, 1994